# EUROPÄISCHE PATENTSCHRIFT

(11) **EP 2 900 401 B1**
(45) Veröffentlichungstag und Bekanntmachung des Hinweises auf die Patenterteilung: **02.11.2016**
(21) Anmeldenummer: 13756475.3
(22) Anmeldetag: 03.09.2013
(51) Int. Cl.: B22D 11/124, B22D 11/128, B65G 13/00

(54) **GEKÜHLTE, MEHRFACH GELAGERTE STRANGFÜHRUNGSROLLE**
COOLED STRAND GUIDE ROLLER MOUNTED AT MORE THAN ONE LOCATION
ROULEAU DE GUIDAGE DE BARRES REFROIDI, À PLUSIEURS PALIERS

(30) Priorität: 28.09.2012 AT 10572012
(43) Veröffentlichungstag der Anmeldung: 05.08.2015
(73) Patentinhaber: Primetals Technologies Austria GmbH, 4031 Linz (AT)
(72) Erfinder: POEPPL, Johann, A-4202 Kirchschlag (AT); SHAN, Guoxin, A-8700 Leoben (AT); THOENE, Heinrich, A-4020 Linz (AT); WIMMER, Franz, A-4752 Riedau (AT)
(74) Vertreter: Metals@Linz
(86) Internationale Anmeldenummer: PCT/EP2013/068154
(87) Internationale Veröffentlichungsnummer: WO 2014/048685

(56) Entgegenhaltungen:
- WO-A1-2011/026957
- WO-A1-2013/026689
- DE-A1-102008 029 944
- DE-A1-102011 003 194
- US-A- 4 603 729
- US-A- 5 152 334
- Siemens VAI: "Strandguide Roller - Preconfigured products for precision applications", , 2007, XP002721379, Gefunden im Internet: URL:http://www.industry.siemens.com/datapo ol/industry/industrysolutions/metals/simet al/en/Strandguide-Roller-en.pdf [gefunden am 2013-10-29]

## Beschreibung

### Gebiet der Technik

Die vorliegende Erfindung betrifft eine gekühlte, mehrfach gelagerte Strangführungsrolle zum Führen eines metallischen Strangs in einer Stranggießmaschine.

Beim Stranggießen ist es bekannt, einen in einer Kokille gebildeten metallischen Strang (beispielsweise aus Stahl) in einer Strangführung zu führen, zu stützen und weiter abzukühlen. Üblicherweise erfolgt das Stützen und Führen des teilerstarrten oder durcherstarrten Strangs durch Strangführungsrollen; außerdem kann der Strang durch gekühlte Strangführungsrollen abgekühlt werden. Durch die hohe Temperatur des Strangs und die hohen ferrostatischen Drücke im Strang sind die Strangführungsrollen jedenfalls hohen thermischen und mechanischen Belastungen ausgesetzt.

Konkret betrifft die Erfindung einerseits eine Strangführungsrolle zum Führen eines metallischen Strangs in einer Stranggießmaschine, aufweisend
- zumindest eine erste und eine zweite Einzelrolle, wobei die erste Einzelrolle drehfest mit der zweiten Einzelrolle verbunden ist, die Einzelrollen einen Kanal zur Innenkühlung aufweisen und eine gekühlte Strangführungsrolle ausbilden;
- zumindest drei Lagerböcke, wobei die äußeren Bereiche der Strangführungsrolle und zumindest ein Bereich zwischen zwei benachbarten Einzelrollen drehbar an einem Lagerbock gelagert sind;
- einen Sammelbalken zur Versorgung der

Strangführungsrolle mit Kühlwasser, der mehrere Konsolen und jeweils zwischen zwei aufeinanderfolgenden Konsolen zumindest ein Kühlmittelrohr zur fluidtechnischen Verbindung der Konsolen umfasst, wobei eine äußere Konsole jeweils zumindest einen ersten Anschluss zur Innenkühlung der gekühlten Strangführungsrolle und zumindest einen zweiten Anschluss zur Kühlung der Lagerböcke aufweist, und der erste Anschluss mit den Kanälen der Einzelrollen und der zweite Anschluss über die Konsolen mit den Lagerböcken fluidtechnisch verbunden ist.

### Stand der Technik

Aus dem Stand der Technik sind mehrfach gelagerte, innengekühlte Strangführungsrollen bereits bekannt (siehe z.B. die Veröffentlichung *Strandguide Roller - Preconfigured products for precision applications,* Siemens VAI, 2007). Eine Ausführungsform einer sogenannten CSR *(Compact Split Roller)* Strangführungsrolle setzt sich aus mehreren, drehfest miteinander verbundenen Einzelrollen zusammen. Um die thermische Belastung der Lager zu reduzieren, werden bei einer Ausführungsform einer CSR Rolle auch die Lagerböcke gekühlt. Hierbei weist die Unterseite jedes Lagerbocks zwei Anschlüsse zum Ein- und Ausführen von Kühlwasser auf. Da die Strangführungsrollen einem Verschleiß unterliegen und sich somit der Durchmesser der Mantelfläche der Rolle ändert, ist es notwendig, die Höhenlage der Strangführungsrolle einstellen zu können. Dazu wird zwischen einem Querbalken der Strangführung und einem Lagerbock eine Beilage beigelegt (engl. *shim),* wobei die Beilage jedoch Ausnehmungen für die Kühlwasser-Anschlüsse im Lagerbock aufweisen muss. Dadurch werden die Beilagen sehr filigran und es wird das Einstellen der Höhenlage aufwändig. Wie eine mehrfach gelagerte, innengekühlte Strangführungsrolle einfach, robust und betriebssicher gestaltet werden kann, die zudem einfach höhenverstellbar ist, geht aus dem Stand der Technik nicht hervor.

Die DE 10 2011 003194 A1 offenbart eine Rolleneinrichtung mit mehreren Einzelrollen zur Führung eines metallischen Strangs in einer Stranggießmaschine. Die Einzelrollen 10 sind auf Rollenlagern 20, 22 gelagert und die Rollenlager auf einer Traverse 30 montiert. Die Traverse 30 umfasst Medienanschlüsse 40, 42 durch die Kühlwasser einerseits in die Einzelrollen und andererseits zur Kühlung der Rollenlager gelangt. Außerdem werden die Rollenlager durch die Traverse 30 fluidtechnisch miteinander verbunden. Gemäß einer Ausführungsform umfasst die Rolleneinrichtung einen ersten Medienkreislauf zur Kühlung der Rollenlager und einen zweiten Medienkreislauf zur Innenkühlung der Einzelrollen.

### Zusammenfassung der Erfindung

Die Aufgabe der Erfindung ist es, die Nachteile des Stands der Technik zu überwinden und eine mehrfach gelagerte, innengekühlte Strangführungsrolle anzugeben, die einfach, robust und betriebssicher ausgeführt ist. Weiters soll die Rolle einfach und rasch höhenverstellbar sein.

Die erstgenannte Aufgabe wird durch die Strangführungsrolle nach Anspruch 1 gelöst. Vorteilhafte Ausführungsformen sind Gegenstand der abhängigen Ansprüche.

Konkret erfolgt die Lösung bei einer Strangführungsrolle der eingangs genannten Art dadurch, dass ein Sammelbalken zur Versorgung der Strangführungsrolle mit Kühlwasser vorgesehen ist, der mehrere Konsolen und jeweils zwischen zwei aufeinanderfolgenden Konsolen zumindest ein Kühlmittelrohr zur fluidtechnischen Verbindung der Konsolen umfasst. Eine äußere Konsole weist jeweils zumindest einen ersten Anschluss zur Innenkühlung der gekühlten Strangführungsrolle und zumindest einen zweiten Anschluss zur Kühlung der Lagerböcke auf, wobei der erste Anschluss mit den Kanälen der Einzelrollen und der zweite Anschluss über die Konsolen mit den Lagerböcken fluidtechnisch verbunden ist.

Die erfindungsgemäße Strangführungsrolle weist zwei separate Kühlkreisläufe auf. Der erste Kühlkreislauf stellt eine Innenkühlung der aus Einzelrollen zusammengesetzten Strangführungsrolle und der zweite Kreislauf eine Innenkühlung der Lagerböcke sicher (der zweite Kreislauf verbindet die Lagerböcke miteinander und bewirkt eine Kühlung der Lager bzw. der Lagerböcke). Dies hat den großen Vorteil, dass die Kühlwassermengen für beide Kreisläufe und dadurch auch die Temperaturen der Strangführungsrolle und der Lager völlig unabhängig voneinander eingestellt werden können. Damit kann die Oberflächentemperatur der Strangführungsrolle unabhängig von der Temperatur der Lager eingestellt werden. Dies ermöglicht eine gezielte Kühlung des Strangs durch die Strangführungsrolle, insbesondere beim Heiß- oder Trockengießen, ohne dass dabei die Lager überhitzen. Somit können gegebenenfalls auch kostengünstige Lager, z.B. temperaturempfindliche Gleitlager, verwendet werden.

Die erfindungsgemäße Konstruktion weist einen sogenannten Sammelbalken auf, der lösbar mit den Lagerböcken der Strangführungsrolle verbunden wird. Der Sammelbalken setzt sich aus mehreren außenliegenden Konsolen und zumindest einer innenliegenden Konsole zusammen. Zwischen zwei aufeinanderfolgenden Konsolen ist jeweils zumindest ein Kühlmittelrohr zur fluidtechnischen Verbindung der Konsolen vorgesehen. Durch den Sammelbalken kann sehr einfach die Höhenlage der Strangführungsrolle eingestellt werden; außerdem werden durch den Sammelbalken die beiden Kühlkreisläufe mit Kühlwasser versorgt.

Dabei wird über einen ersten Anschluss einer äußeren Konsole des Sammelbalkens Kühlwasser in den innenliegenden Kanal der Strangführungsrolle eingeführt. Außerdem wird über einen zweiten Anschluss Kühlwasser in die äußere Konsole eingeführt. Die Verbindung zwischen zwei aufeinanderfolgenden (benachbarten) Konsolen erfolgt durch zumindest ein Kühlmittelrohr. Weiters ist jede Konsole fluiddicht mit einem Lagerbock verbunden, wobei der Lagerbock zumindest einen Kanal zur Kühlung aufweist. Am selben Ende oder am gegenüberliegenden Ende des Sammelbalkens wird Kühlwasser vom innenliegenden Kanal der Strangführungsrolle in eine äußere Konsole, und von der Konsole durch einen weiteren ersten Anschluss abgeführt. Außerdem wird Kühlwasser, das zur Kühlung der Lagerböcke verwendet wurde, von der äußeren Konsole über einen zweiten Anschluss abgeführt.

Die Fertigung einer außenliegenden Konsole wird stark vereinfacht, da die Konsole, vorzugsweise auf ihrer Unterseite, eine parallel zur Gießrichtung ausgerichtete Zwischenplatte umfasst. Die Zwischenplatte weist mindestens einen ersten Anschluss und mindestens einen zweiten Anschluss auf. Somit kann Kühlwasser von einem Strangführungssegment über eine Steckrohr und einen Anschluss in die Zwischenplatte eingeführt werden, wobei das Kühlwasser von der Zwischenplatte über eine Dichtung (bspw. einen O-Ring) zu einer Leitung oder einem Kühlmittelrohr weitergeführt wird.

Bei einer Ausführungsform weist jede äußere Konsole einen ersten und einen zweiten Anschluss auf. Hierbei wird Kühlwasser auf einer Seite in die Strangführungsrolle eingeführt und auf der gegenüberliegenden Seite der Strangführungsrolle wieder abgeführt. Bei der Anströmung der Lagerböcke verhält es sich ebenso. Bei dieser Ausführungsform kann die Zufuhr des Kühlmittels in die beiden Kühlkreisläufe entweder auf derselben Seite oder auf gegenüberliegenden Seiten erfolgen.

Bei einer alternativen Ausführungsform, weist eine äußere Konsole zwei erste Anschlüsse und zwei zweite Anschlüsse auf. Dabei erfolgt die Zu- und Abfuhr des Kühlwassers in beide Kühlkreisläufe auf derselben Seite des Sammelbalkens. Hierbei wird Kühlwasser an einem Ende in die Strangführungsrolle eingeleitet, anschließend wird die Rolle in Längsrichtung durchströmt, am gegenüberliegenden Ende der Strangführungsrolle wird die Strömungsrichtung umgekehrt, die Rolle in Längsrichtung durchströmt, und das Kühlwasser am selben Ende der Strangführungsrolle abgeleitet. Bei der Durchströmung der Lagerböcke verhält es sich ebenso. Beispielsweise wird das Kühlwasser von Konsole zu Konsole durch eine erste Reihe von Kühlmittelrohren zugeführt, die Strömungsrichtung des Kühlwassers bei der letzten Konsole umgekehrt und schließlich das Kühlwasser von Konsole zu Konsole durch eine zweite Reihe von Kühlmittelrohren wieder abgeführt.

Bei einer vorteilhaften Ausführungsform umfasst der Sammelbalken zwischen zwei aufeinanderfolgenden Konsolen zwei Kühlmittelrohre zur Verbindung der Konsolen. Dadurch werden erstens die Konsolen zueinander gegen Verdrehung gesichert; zweitens kann z.B. das Kühlmittel durch ein Kühlmittelrohr in eine Richtung und durch das zweite Kühlmittelrohr in die entgegengesetzte Richtung geführt werden.

Es ist zweckmäßig, wenn ein erster Anschluss einer außenliegenden Konsole über eine Leitung und eine Dreheinführung mit einem Kanal der Einzelrolle verbunden ist. Bei der Leitung kann es sich um eine Rohrleitung oder einen Schlauch handeln.

Für eine gleichmäßige Kühlung eines Lagerbocks, der durch eine horizontale Ebene, die durch die Drehachse der Strangführungsrolle verläuft, in einen Unterteil und einen Oberteil gegliedert wird, weist der Unterteil zumindest zwei Bohrungen auf, die in Gießrichtung versetzt sind. Dadurch werden thermische Verspannungen des Lagers verhindert. Bei dieser Ausführungsform spielt es keine Rolle, ob der Oberteil und der Unterteil lösbar miteinander verbunden sind, oder ob es sich um einen Bauteil (sog. Monoblock) handelt.

Ein Lager im Lagerbock wird gleichmäßig gekühlt, wenn der Oberteil einen Wasserkanal aufweist, der Kühlwasser von einer ersten Bohrung im Unterteil um das Lager herum in eine zweite Bohrung im Unterteil führen kann. Zusätzlich dazu kann auch der Unterteil einen ringförmigen Wasserkanal aufweisen.

Eine einfache, robuste und fluiddichte Verbindung zwischen zwei Einzelrollen kann erzielt werden, wenn ein Ende der ersten Einzelrolle einen Zapfen und ein Ende der zweiten Einzelrolle eine Ausnehmung zur Aufnahme des Zapfens aufweist, und der Zapfen mit der Ausnehmung drehfest verbunden ist.

Bei einer Ausführungsform wird die fluidtechnische Verbindung zwischen einer Konsole und einem Lagerbock durch ein Steckrohr bewerkstelligt. Alternativ dazu kann die Konsole mit dem Lagerbock durch einen O-Ring abgedichtet werden.

Ferner ist es zweckmäßig, wenn ein Strangführungssegment mit einer Konsole des Sammelbalkens lösbar verbunden ist, wobei das Strangführungssegment die mit einer äußeren Konsole durch ein Steckrohr fluidtechnisch verbunden ist. Durch ein Steckrohr wird eine fluidtechnische Verbindung auch bei einer Relativverschiebung zwischen zwei Bauteilen (z.B. bei der oben genannten Höhenverstellung) sichergestellt.

Zur einfachen Höhenverstellung der Konsole gegenüber einem Strangführungssegment ist es vorteilhaft, wenn eine Konsole eine Schraube zur Höhenverstellung der Konsole gegenüber dem Strangführungssegment aufweist, wobei zwischen der Konsole und dem Strangführungssegment eine Beilage angeordnet ist.

### Kurze Beschreibung der Zeichnungen

Weitere Vorteile und Merkmale der vorliegenden Erfindung ergeben sich aus der nachfolgenden Beschreibung nicht einschränkender Ausführungsbeispiele, wobei auf die folgenden Figuren Bezug genommen wird, die Folgendes zeigen:
Fig 1 eine schematische Darstellung einer ersten Ausführungsform der erfindungsgemäßen Strangführungsrolle
Fig 2 eine Darstellung einer zweiten Ausführungsform der erfindungsgemäßen Strangführungsrolle
Fig 3 eine Darstellung zu Fig 2 in Explosionsdarstellung
Fig 4 eine Darstellung des Sammelbalkens zu Fig 2
Fig 5 eine Detaildarstellung einer mittleren Konsole
Fig 6 eine Darstellung der Bohrungen zu Fig 5
Fig 7 eine Detaildarstellung einer äußeren Konsole
Fig 8 eine Darstellung der Bohrungen zu Fig 7

### Beschreibung der Ausführungsformen

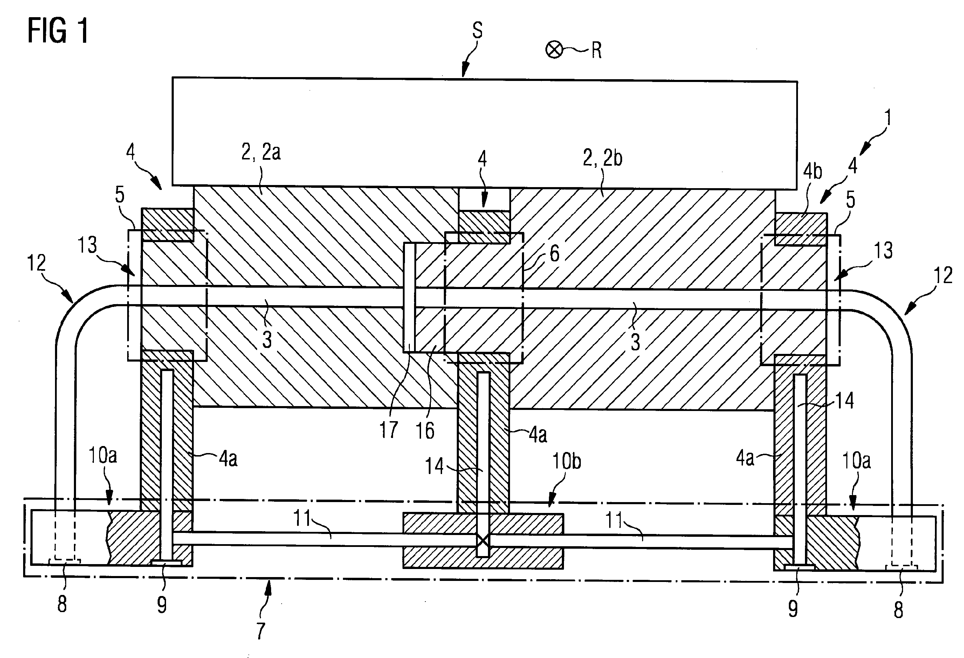

Die Fig 1 zeigt eine schematische Darstellung einer Strangführungsrolle 1, die durch zwei Einzelrollen 2, nämlich einer ersten Einzelrolle 2a und einer zweiten Einzelrolle 2b, gebildet wird. Die beiden Einzelrollen 2 sind durch einen Schrumpfsitz bzw. eine Presspassung zwischen einem Zapfen 16 und einer Ausnehmung 17 in den Einzelrollen 2 drehfest miteinander verbunden. Um die hohen mechanischen Belastungen durch den symbolisch dargestellten Stahlstrang S standhalten zu können, ist die Strangführungsrolle 1 sowohl in den äußeren Bereichen 5 der Rolle als auch jeweils im Bereich 6 zwischen zwei Einzelrollen 2a, 2b drehbar gelagert. Hierbei stützt sich die Strangführungsrolle 1 über die nicht näher dargestellten Lager (z.B. ein Kugellager oder ein Gleitlager) an den Lagerböcken 4 ab. Um den hohen thermischen Belastungen standhalten zu können, weisen die Einzelrollen 2a, 2b jeweils einen innenliegenden Kühlwasserkanal 3 auf. Dadurch wird die Oberflächentemperatur der Strangführungsrolle 1 begrenzt bzw. gezielt eingestellt; außerdem wird der Strang S über die Mantelfläche der Rolle 1 gekühlt. Um ein Überhitzen der Lager in den Lagerböcken 4 zu verhindern (insbesondere bei einem Gießstopp bzw. einer Verlangsamung der Gießgeschwindigkeit), sind die Unterteile 4a der Lagerböcke 4 mit je zwei Bohrungen 14 ausgeführt. Der Unterteil 4a des Lagerbocks 4 ist lösbar mit dem Oberteil 4b verbunden. Jeder Lagerbock 4 ist jeweils mit einer Konsole 10 fluiddicht verbunden, wobei die beiden außenliegenden Konsolen 10a, die innenliegende Konsole 10b und die Kühlmittelrohre 11 zwischen je zwei aufeinanderfolgenden Konsolen 10 den Sammelbalken 7 ausbilden. Über den Sammelbalken 7 wird die Strangführungsrolle 1 mit Kühlwasser versorgt.

Einerseits wird Kühlwasser (in dieser Anmeldung wird das flüssige Kühlfluid, das neben H₂O auch andere Bestandteile aufweisen kann, ebenfalls als Kühlwasser bezeichnet) über den ersten Anschluss 8 in der rechts dargestellten äußeren Konsole 10a und von der Konsole 10a über die Leitung 12 in den Kühlmittelkanal 3 der Strangführungsrolle 1 eingeführt. Nachdem das Kühlwasser die Kanäle 3 der beiden Einzelrollen 2 durchströmt hat, wird es von der Strangführungsrolle 1 über die Leitung 12 zum ersten Anschluss 8 in der links dargestellten äußeren Konsole 10a abgeführt. Um die schematische Darstellung nicht unnötig zu verkomplizieren, wurde auf eine detaillierte Darstellung der Dreheinführungen 13 zwischen den stillstehenden Leitungen 12 und der rotierenden Strangführungsrolle 1 verzichtet. Dem einschlägigen Fachmann sind Dreheinführungen bestens bekannt.

Andererseits wird Kühlwasser über den zweiten Anschluss 9 in der rechts dargestellten äußeren Konsole 10a zu den Lagerböcken 4 geführt. Hierbei ist jede Konsole 10a, 10b mit einem Lagerbock 4 fluiddicht verbunden. Die Verbindung zwischen zwei benachbarten Konsolen 10a-10b und 10b-10a erfolgt über zwei Kühlmittelrohre 11. Das erwärmte Kühlwasser wird über den zweiten Anschluss 9 in der links dargestellten äußeren Konsole 10a abgeführt.

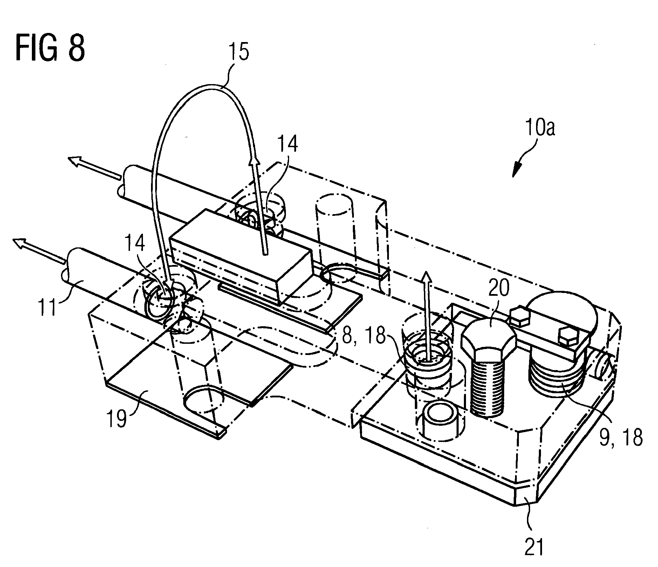

Zur Kühlung weisen die Unterteile 4a der Lagerböcke 4 jeweils zwei Bohrungen 14 auf, die einen Versatz in Gießrichtung R aufweisen. Bei thermisch noch höher belasteten Rollen 1 können außerdem die Oberteile 4b der Lagerböcke 4 einen ringförmigen Wasserkanal 15 aufweisen, sodass das Kühlwasser von einer ersten Bohrung 14 im Unterteil 4a in den Oberteil 4b, und vom Oberteil 4b über den konzentrisch zum Zapfen 16 angeordneten Wasserkanal 15 in eine zweite Bohrung 14 in den Unterteil 4a strömen kann (siehe Fig 8). Dadurch wird der Lagerbocks 4 und das Lager effektiv vor Überhitzung geschützt bzw. gezielt eine Lagertemperatur eingestellt.

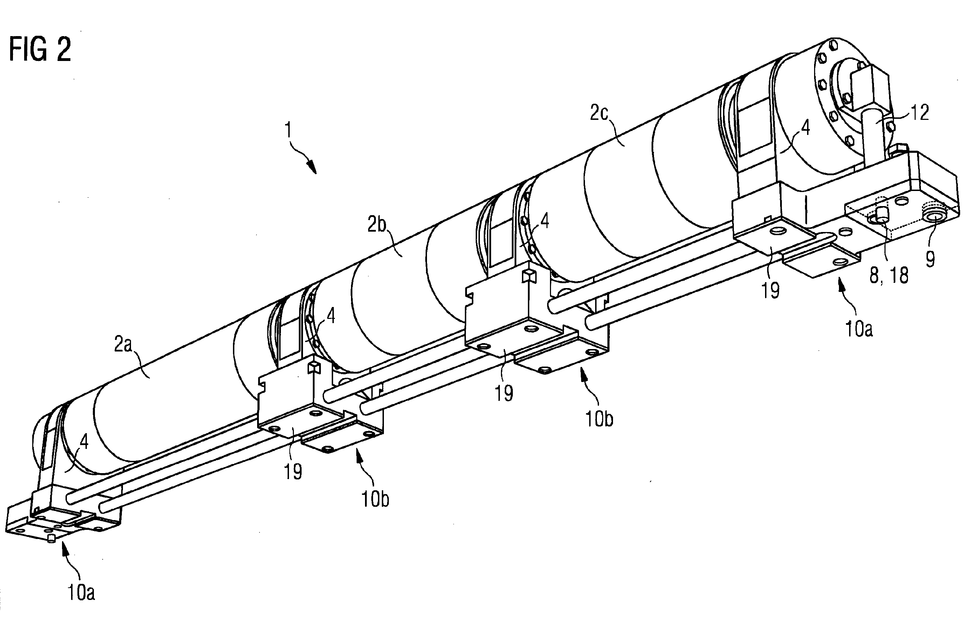

Die ersten und zweiten Anschlüsse 8,9 der außenliegenden Konsolen 10a des Sammelbalkens 7 können sich wie dargestellt auf der Unterseite der Konsolen 10a oder auch z.B. seitlich an der Konsole befinden. Eine seitliche Anordnung ist vorteilhaft, da der Konsole 10a zur Höheneinstellung der Strangführungsrolle 1 einfach Beilagen 19 (siehe Fig 2, 3, 5, 6 und 8) beigelegt werden können, ohne dass die Beilagen die Dichtigkeit der Fluidverbindung beeinflussen würden.

Eine zweite Ausführungsform einer erfindungsgemäßen Strangführungsrolle ist in den Fig 2 bis 8 dargestellt. Im Unterschied zu Fig 1 wird die Strangführungsrolle 1 durch drei Einzelrollen 2a...2c gebildet. Die beiden äußeren Bereiche der Rolle 1 sowie die inneren Bereiche zwischen je zwei Einzelrollen 2a-2b und 2b-2c sind jeweils durch einen Lagerbock 4 drehbar gelagert. Die Lagerböcke 4 sind mit einem Sammelbalken 7 lösbar verbunden, wobei die Höhenlage des Sammelbalkens - und somit auch der Strangführungsrolle 1 - einfach über Beilagen 19 eingestellt werden kann. Die Beilagen 19 befinden sich zwischen einem nicht dargestellten Querbalken eines Strangführungssegments und einer Konsole 10 des Sammelbalkens 7. Über den Sammelbalken 7 wird zudem die Rolle 1 mit Kühlwasser versorgt.

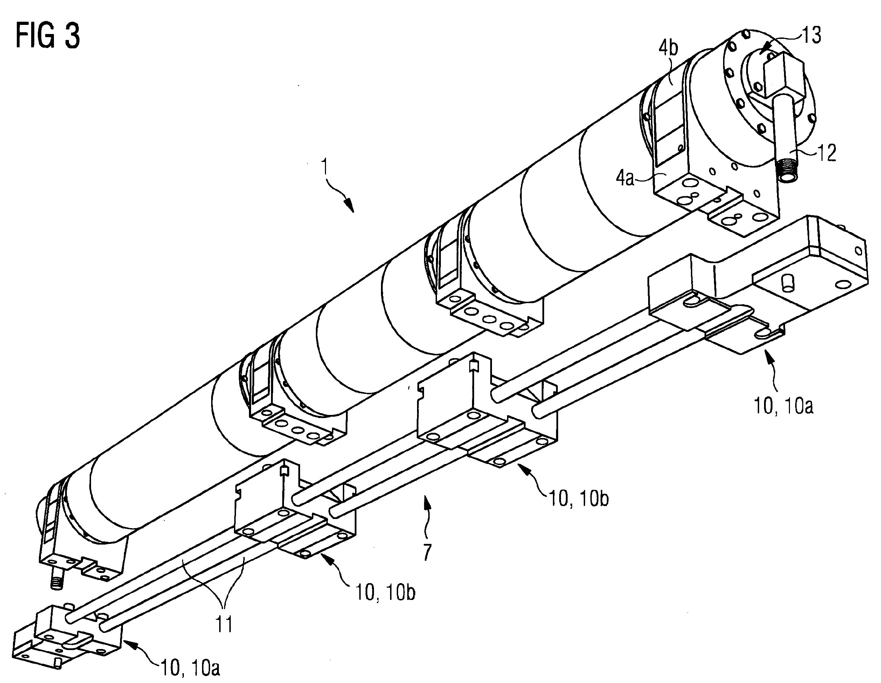

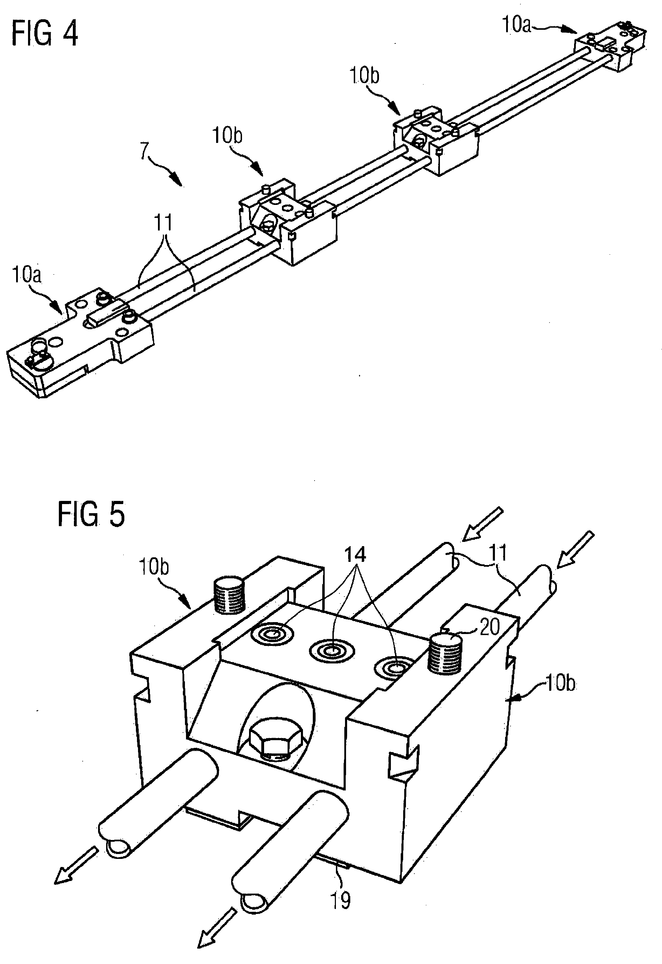

Die Strangführungsrolle 1 mit dem Sammelbalken 7 ist in Fig 3 in einer Explosionsdarstellung gezeigt. Der Sammelbalken 7 ist separat in Fig 4 dargestellt. Aus Fig 2 ist ersichtlich, dass Kühlwasser über einen ersten Anschluss 8 in der äußeren Konsole 10a in die Leitung 12 und von der Leitung 12 über eine Dreheinführung (z.B. einen Prelonring, siehe z.B. WO 2011/117383 A1) in einen nicht näher dargestellten innenliegenden Kühlkanal 3 der Strangführungsrolle 1 eingeführt wird. Am anderen Ende des Sammelbalkens wird das Kühlwasser in analoger Weise abgeführt. Über den zweiten Anschluss 9 in der äußeren Konsole 10a wird Kühlwasser einerseits in den Unterteil 4a des Lagerbocks 4 und andererseits über die Kühlmittelrohre 11 zu den nachfolgenden Konsolen geführt.

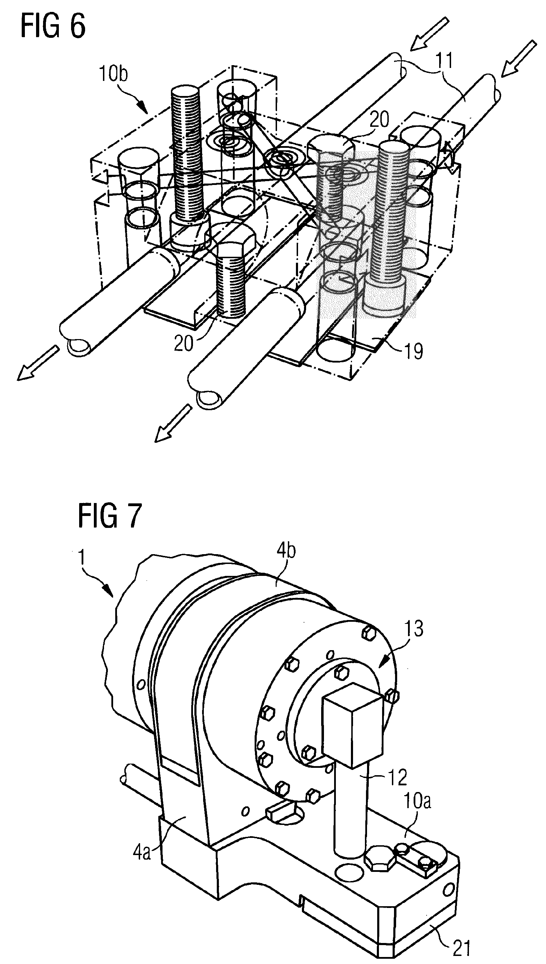

Die Kühlwasserführung in einer äußeren Konsole 10a ist in den Fig 7 und 8 noch einmal detaillierter dargestellt. Wie bereits oben beschrieben, wird Kühlwasser über ein Steckrohr 18 und den ersten Anschluss 8 in die äußere Konsole 10a eingeführt und von der äußeren Konsole 10a über die Leitung 12 zur Strangführungsrolle 1 geführt. Außerdem besteht ein separater Kühlwasserkreislauf für die Kühlung der Lagerböcke 4, wobei Kühlwasser ebenfalls über ein Steckrohr 18 und den zweiten Anschluss 9 in die äußere Konsole 10a eingeführt wird und von dieser einerseits den Lagerbock 4 kühlt, der mit der äußeren Konsole 10a verbunden ist, und über die beiden Kühlmittelrohre 11 die innenliegenden Konsolen 10b versorgt. Weiters besteht im Oberteil 4b des Lagerbocks 4 ein ringförmiger Wasserkanal 15, der die beiden Bohrungen im Unterteil 4a des Lagerbocks 4 verbindet, sodass Kühlwasser von der hinten dargestellten Bohrung 14 in der Konsole 10a durch den Unterteil 4a des Lagerbocks 4 und über einen ringförmigen Wasserkanal 15 im Oberteil 4b des Lagerbocks 4 und durch den Unterteil 4a des Lagerbocks 4 in die vorne dargestellte Bohrung 14 in der Konsole gelangen kann. Die Strömungsrichtung des Kühlwassers ist durch Pfeile dargestellt. Für eine einfache und genaue Fertigung der äußeren Konsole 10a ist es vorteilhaft, wenn die äußere Konsole 10a eine Zwischenplatte 21 umfasst, wobei sich der erste Anschluss 8 und der zweite Anschluss 9 auf der Unterseite der Zwischenplatte 21 befinden. Die Abdichtung zwischen einem nicht dargestellten Strangführungssegment und einem ersten oder zweiten Anschluss 8,9 in der Zwischenplatte 21 erfolgt über Steckrohre 18, da die Konsole 10a gegenüber dem Strangführungssegment mittels der Schraube 20 höhenverstellbar ist. Die Abdichtung zwischen der Zwischenplatte 21 und dem restlichen Teil der Konsole 10a erfolgt über O-Ringe, da die Zwischenplatte 21 bei der Höhenverstellung gegenüber dem restlichen Teil der Konsole 10a keine Relativbewegung macht. Der Lagerbock 4, der durch eine horizontale Ebene, die durch die Drehachse der Strangführungsrolle 1 verläuft, in einen Unterteil 4a und einen Oberteil 4b gegliedert wird, ist als ein einziger Bauteil (Monoblock) ausgeführt.

Die Kühlwasserführung in einer mittleren Konsole 10b ist in den Fig 5 und 6 detaillierter dargestellt. Wie bereits beschrieben, wird die mittlere Konsole 10b durch die beiden Kühlmittelrohre 11 mit Kühlwasser versorgt. Die Strömungsrichtung des Kühlwassers ist wieder durch Pfeile gekennzeichnet. Das durch die beiden Kühlmittelrohre 11 ankommende Kühlwasser wird über drei Bohrungen 14 in den nicht dargestellten Lagerbock 4 geführt, der mit der Konsole 10b über nicht dargestellte Steckrohre mit Dichtungen verbunden ist. Außerdem wird Kühlwasser zu der in Fig 4 als zweite von links dargestellten, innenliegenden Konsole 10b geleitet. Die sich überkreuzenden Bohrungen im oberen Bereich der Konsole 10b dienen der Schmiermittelversorgung eines nicht dargestellten Wälzlagers im Lagerbock 4.

Bei der Höheneinstellung der Strangführungsrolle wird zuerst die Höhenlage des Sammelbalkens 7 gegenüber einem nicht dargestellten Strangführungssegments durch Schrauben 20 (siehe Fig 5 bis 8) eingestellt. Anschließend werden zwischen einem Balken der Strangführung und dem Sammelbalken 7 Beilagen 19 beigelegt, die sicherstellen, dass der Sammelbalken 7 eben auf dem Balken aufliegt und somit die Strangführungskräfte sicher in die Strangstützkonstruktion eingeleitet werden.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Strangführungsrolle
- 2: Einzelrolle
- 2a...2c: erste, zweite und dritte Einzelrolle
- 3: Kanal
- 4: Lagerbock
- 4a: Unterteil des Lagerbocks
- 4b: Oberteil des Lagerbocks
- 5: äußerer Bereich der Strangführungsrolle
- 6: Bereich zwischen zwei Einzelrollen
- 7: Sammelbalken
- 8: erster Anschluss
- 9: zweiter Anschluss
- 10: Konsole
- 10a: außenliegende Konsole
- 10b: innenliegende Konsole
- 11: Kühlmittelrohr
- 12: Leitung
- 13: Dreheinführung
- 14: Bohrung
- 15: Wasserkanal
- 16: Zapfen
- 17: Ausnehmung
- 18: Steckrohr
- 19: Beilage
- 20: Schraube
- 21: Zwischenplatte

- R: Gießrichtung
- S: Gießstrang

## Patentansprüche

1. Strangführungsrolle (1) zum Führen eines metallischen Strangs (S) in einer Stranggießmaschine, aufweisend
- zumindest eine erste (2a) und eine zweite Einzelrolle (2b), wobei die erste Einzelrolle (2a) drehfest mit der zweiten Einzelrolle (2b) verbunden ist, die Einzelrollen (2a, 2b) einen Kanal (3) zur Innenkühlung aufweisen und eine gekühlte Strangführungsrolle (1) ausbilden;
- zumindest drei Lagerböcke (4), wobei die äußeren Bereiche (5) der gekühlten Strangführungsrolle (1) und ein Bereich (6) zwischen zwei Einzelrollen (2a,2b) drehbar an einem Lagerbock (4) gelagert sind;
- einen Sammelbalken (7) zur Versorgung der Strangführungsrolle (1) mit Kühlwasser, der mehrere Konsolen (10,10a,10b) und jeweils zwischen zwei aufeinanderfolgenden Konsolen (10,10a,10b) zumindest ein Kühlmittelrohr (11) zur fluidtechnischen Verbindung der Konsolen (10,10a,10b) umfasst, wobei eine äußere Konsole (10a) jeweils zumindest einen ersten Anschluss (8) zur Innenkühlung der gekühlten Strangführungsrolle (1) und zumindest einen zweiten Anschluss (9) zur Kühlung der Lagerböcke (4) aufweist, und der erste Anschluss (8) mit den Kanälen (3) der Einzelrollen (2a,2b) und der zweite Anschluss (9) über die Konsolen (10) mit den Lagerböcken (4) fluidtechnisch verbunden ist, **dadurch gekennzeichnet, dass**
eine außenliegende Konsole (10a) eine Zwischenplatte (21) aufweist, die parallel zur Gießrichtung (R) ausgerichtet ist, mit mindestens einen ersten Anschluss (8) und mindestens einen zweiten Anschluss (9).

2. Strangführungsrolle nach Anspruch 1, **dadurch gekennzeichnet, dass** jede äußere Konsole (10a) einen ersten Anschluss (8) und einen zweiten Anschluss (9) aufweist.

3. Strangführungsrolle nach Anspruch 1, **dadurch gekennzeichnet, dass** eine äußere Konsole (10a) zwei erste Anschlüsse (8) und zwei zweite Anschlüsse (9) aufweist.

4. Strangführungsrolle nach einem der vorhergehenden Ansprüche, **dadurch gekennzeichnet, dass** der Sammelbalken (7) zwischen zwei aufeinanderfolgenden Konsolen (10,10a) zwei Kühlmittelrohre (11) zur Verbindung der Konsolen (10) umfasst.

5. Strangführungsrolle nach einem der vorhergehenden Ansprüche, **dadurch gekennzeichnet, dass** ein erster Anschluss (8) einer außenliegenden Konsole (10a) über eine Leitung (12) und eine Dreheinführung (13) mit einem Kanal (3) der Einzelrolle (2a,2b) verbunden ist.

6. Strangführungsrolle nach einem der vorhergehenden Ansprüche, wobei ein Lagerbock (4) durch eine horizontale Ebene, die durch die Drehachse der Strangführungsrolle (1) verläuft, in einen Unterteil (4a) und einen Oberteil (4b) gegliedert wird, **dadurch gekennzeichnet, dass** der Unterteil (4a) zumindest zwei Bohrungen (14) aufweist, die in Gießrichtung (R) versetzt sind.

7. Strangführungsrolle nach Anspruch 6, **dadurch gekennzeichnet, dass** der Oberteil (4b) einen Wasserkanal (15) aufweist, der Kühlwasser von einer ersten Bohrung (14) im Unterteil (4a) um das Lager herum in eine zweite Bohrung (14) im Unterteil (4a) führen kann.

8. Strangführungsrolle nach Anspruch 1, **dadurch gekennzeichnet, dass** ein Ende der ersten Einzelrolle (2a) einen Zapfen (16) und ein Ende der zweiten Einzelrolle (2b) eine Ausnehmung (17) zur Aufnahme des Zapfens (16) aufweist, und der Zapfen (16) mit der Ausnehmung (17) drehfest verbunden ist.

9. Strangführungsrolle nach einem der vorhergehenden Ansprüche, **dadurch gekennzeichnet, dass** die fluidtechnische Verbindung zwischen einer Konsole (10) und einem Lagerbock (4) durch ein Steckrohr (18) oder einen O-Ring erfolgt.

10. Strangführungsrolle nach einem der vorhergehenden Ansprüche, **dadurch gekennzeichnet, dass** die Zwischenplatte (21) auf der Unterseite der außenliegenden Konsole (10a) angeordnet ist.

11. Strangführung mit einer Strangführungsrolle nach einem der Ansprüche 1 bis 10, **dadurch gekennzeichnet, dass** ein Strangführungssegment mit einer Konsole (10,10a,10b) des Sammelbalkens (7) lösbar verbunden ist, wobei das Strangführungssegment mit einer äußeren Konsole (10a) durch ein Steckrohr (18) fluidtechnisch verbunden ist.

12. Strangführung nach Anspruch 11, **dadurch gekennzeichnet, dass** eine Konsole (10) eine Schraube (20) zur Höhenverstellung der Konsole (10) gegenüber dem Strangführungssegment aufweist, wobei zwischen der Konsole (10) und dem Strangführungssegment eine Beilage (19) angeordnet ist.

## Claims

1. Strand guide roller (1) for guiding a metal strand (S) in a continuous casting machine, comprising
- at least one first (2a) and one second individual roller (2b), wherein the first individual roller (2a) is connected in a non-rotatable manner to the second individual roller (2b), the individual rollers (2a,2b) have a duct (3) for internal cooling and form a cooled strand guide roller (1) ;
- at least three bearing blocks (4), wherein the outer regions (5) of the cooled strand guide roller (1) and a region (6) between two individual rollers (2a,2b) are rotatably mounted at a bearing block (4);
- a manifold bar (7) for supplying the strand guide roller (1) with cooling water, comprising a plurality of brackets (10,10a,10b) and at least one coolant pipe (11) in each case between two successive brackets (10,10a,10b) for the fluidical connection of the brackets (10,10a,10b), wherein an outer bracket (10a) has in each case at least one first connection (8) for the internal cooling of the cooled strand guide roller (1) and at least one second connection (9) for cooling the bearing blocks (4), and the first connection (8) is fluidically connected to the ducts (3) of the individual rollers (2a,2b) and the second connection (9) is fluidically connected via the brackets (10) to the bearing blocks (4), **characterised in that**
an outer bracket (10a) comprises an intermediate plate (21) which is aligned parallel with the direction of casting (R) and has at least one first connection (8) and at least one second connection (9).

2. Strand guide roller according to claim 1, **characterised in that** each outer bracket (10a) has a first connection (8) and a second connection (9).

3. Strand guide roller according to claim 1, **characterised in that** an outer bracket (10a) has two first connections (8) and two second connections (9).

4. Strand guide roller according to one of the preceding claims, **characterised in that** the manifold bar (7) comprises two coolant pipes (11) between two successive brackets (10,10a) for the purpose of connecting said brackets (10).

5. Strand guide roller according to one of the preceding claims, **characterised in that** a first connection (8) of an outer bracket (10a) is connected via a line (12) and a rotary inlet (13) to a duct (3) of the individual roller (2a,2b).

6. Strand guide roller according to one of the preceding claims, wherein a bearing block (4) is divided into a lower part (4a) and an upper part (4b) by a horizontal plane running through the rotational axis of the strand guide roller (1), **characterised in that** the lower part (4a) has at least two holes (14) which are staggered in the direction of casting (R).

7. Strand guide roller according to claim 6, **characterised in that** the upper part (4b) has a water duct (15) which can carry cooling water from a first hole (14) in the lower part (4a) around the bearing and into a second hole (14) in the lower part (4a).

8. Strand guide roller according to claim 1, **characterised in that** one end of the first individual roller (2a) features a spigot (16) and one end of the second individual roller (2b) features a recess (17) for accommodating said spigot (16), and the spigot (16) is connected to the recess (17) in a non-rotatable manner.

9. Strand guide roller according to one of the preceding claims, **characterised in that** the fluidical connection between a bracket (10) and a bearing block (4) is effected by means of a non-screwed pipe (18) or an O-ring.

10. Strand guide roller according to one of the preceding claims, **characterised in that** the intermediate plate (21) is arranged on the underside of the outer bracket (10a).

11. Strand guide comprising a strand guide roller according to one of the claims 1 to 10, **characterised in that** a strand guide segment is connected in a detachable manner to a bracket (10,10a,10b) of the manifold bar (7), wherein the strand guide segment is fluidically connected to an outer bracket (10a) by means of a non-screwed pipe (18).

12. Strand guide according to claim 11, **characterised in that** a bracket (10) has a screw (20) for adjusting the height of the bracket (10) relative to the strand guide segment, wherein a shim (19) is arranged between the bracket (10) and the strand guide segment.

## Revendications

1. Rouleau de guidage de barres (1) pour le guidage d'une barre métallique (S) dans une machine de coulée continue, présentant
- au moins un premier (2a) et un deuxième (2b) rouleau individuel, dans lequel le premier rouleau individuel (2a) est relié solidairement en rotation au deuxième rouleau individuel (2b), les rouleaux individuels (2a, 2b) présentent un canal (3) pour le refroidissement intérieur et forment un rouleau de guidage de barres refroidi (1);
- au moins trois supports de palier (4), dans lequel les régions extérieures (5) du rouleau de guidage de barres refroidi (1) et une région (6) entre deux rouleaux individuels (2a, 2b) sont montées de façon rotative sur un support de palier (4);
- une poutre collectrice (7) pour l'alimentation du rouleau de guidage de barres (1) en eau de refroidissement, qui comprend plusieurs consoles (10, 10a, 10b) et chaque fois entre deux consoles successives (10, 10a, 10b) au moins un tube d'agent réfrigérant (11) pour la connexion fluidique des consoles (10, 10a, 10b), dans lequel une console extérieure (10a) présente chaque fois au moins un premier raccord (8) pour le refroidissement intérieur du rouleau de guidage de barres refroidi (1) et au moins un deuxième raccord (9) pour le refroidissement des supports de palier (4), et le premier raccord (8) est connecté fluidiquement aux canaux (3) des rouleaux individuels (2a, 2b) et le deuxième raccord (9) est connecté fluidiquement aux supports de palier (4) via les consoles (10),
**caractérisé en ce qu'**une console placée extérieurement (10a) présente une plaque intermédiaire (21), qui est orientée parallèlement à la direction de coulée (R), avec au moins un premier raccord (8) et au moins un deuxième raccord (9).

2. Rouleau de guidage de barres selon la revendication 1, **caractérisé en ce que** chaque console extérieure (10a) présente un premier raccord (8) et un deuxième raccord (9).

3. Rouleau de guidage de barres selon la revendication 1, **caractérisé en ce qu'**une console extérieure (10a) présente deux premiers raccords (8) et deux deuxièmes raccords (9).

4. Rouleau de guidage de barres selon l'une quelconque des revendications précédentes, **caractérisé en ce que** la poutre collectrice (7) comprend, entre deux consoles successives (10, 10a), deux tubes d'agent réfrigérant (11) pour le raccordement des consoles (10).

5. Rouleau de guidage de barres selon l'une quelconque des revendications précédentes, **caractérisé en ce qu'**un premier raccord (8) d'une console extérieure (10a) est connecté par une conduite (12) et une entrée tournante (13) à un canal (3) du rouleau individuel (2a, 2b).

6. Rouleau de guidage de barres selon l'une quelconque des revendications précédentes, dans lequel un support de palier (4) est subdivisé en une partie inférieure (4a) et une partie supérieure (4b) par un plan horizontal, qui passe par l'axe de rotation du rouleau de guidage de barres (1), **caractérisé en ce que** la partie inférieure (4a) présente au moins deux alésages (14), qui sont décalés dans la direction de coulée (R).

7. Rouleau de guidage de barres selon la revendication 6, **caractérisé en ce que** la partie supérieure (4b) présente un canal à eau (15), qui peut conduire de l'eau de refroidissement d'un premier alésage (14) dans la partie inférieure (4a) autour du palier dans un deuxième alésage (14) dans la partie inférieure (4a).

8. Rouleau de guidage de barres selon la revendication 1, **caractérisé en ce qu'**une extrémité du premier rouleau individuel (2a) présente un tourillon (16) et une extrémité du deuxième rouleau individuel (2b) présente un évidement (17) destiné à recevoir le tourillon (16), et le tourillon (16) est assemblé solidairement en rotation à l'évidement (17).

9. Rouleau de guidage de barres selon l'une quelconque des revendications précédentes, **caractérisé en ce que** la connexion fluidique entre une console (10) et un support de palier (4) est réalisée avec un tube enfichable (18) ou un joint torique.

10. Rouleau de guidage de barres selon l'une quelconque des revendications précédentes, **caractérisé en ce que** la plaque intermédiaire (21) est disposée sur le côté inférieur de la console extérieure (10a).

11. Guidage de barres avec un rouleau de guidage de barres selon l'une quelconque des revendications 1 à 10, **caractérisé en ce qu'**un segment de guidage de barres est attaché de façon séparable à une console (10, 10a, 10b) de la poutre collectrice (7), dans lequel le segment de guidage de barres est connecté fluidiquement à une console extérieure (10a) au moyen d'un tube enfichable (18).

12. Guidage de barres selon la revendication 11, **caractérisé en ce qu'**une console (10) présente une vis (20) pour le réglage en hauteur de la console (10) par rapport au segment de guidage de barres, dans lequel une cale (19) est disposée entre la console (10) et le segment de guidage de barres.
